# EUROPEAN PATENT SPECIFICATION

(11) **EP 2 918 409 B1**
(45) Date of publication and mention of the grant of the patent: **30.10.2019**
(21) Application number: 13853939.0
(22) Date of filing: 05.11.2013
(51) Int. Cl.: B32B 27/32, B65D 65/40, C08L 23/10, C08L 45/00, C08L 53/00, B32B 27/08, B32B 27/30, B65D 75/00

(54) **STRETCH WRAPPING FILM**
DEHNFOLIENVERPACKUNG
FILM D'EMBALLAGE ÉTIRABLE

(30) Priority: 08.11.2012 JP 2012245947
(43) Date of publication of application: 16.09.2015
(73) Proprietor: Mitsubishi Chemical Corporation, Tokyo (JP)
(72) Inventor: MOGAWA, Ryo, Nagahama-shi Shiga 526-0023 (JP); NEMOTO, Tomoyuki, Nagahama-shi Shiga 526-0023 (JP)
(74) Representative: Ter Meer Steinmeister & Partner
(86) International application number: PCT/JP2013/079849
(87) International publication number: WO 2014/073512

(56) References cited:
- EP-A1- 0 705 687
- EP-A1- 1 552 921
- EP-A1- 2 471 859
- WO-A1-2012/098947
- JP-A- H11 293 083
- JP-A- 2003 039 608
- JP-A- 2008 012 825

## Description

### TECHNICAL FIELD

The present invention relates to a stretch packaging film suitably used for food packaging, and more particularly, to a stretch packaging film comprising no chlorine nor plasticizer for polyvinyl chloride.

### BACKGROUND ART

Heretofore, polyvinyl chloride-based films have been mainly used as stretch packaging films for so-called prepackaging to overwrap fruits, meats or prepared food which are placed on lightweight trays. The reason for the use of the polyvinyl chloride-based films resides in that the polyvinyl chloride-based films have not only a good packaging suitability such as a high packaging efficiency and neat packaging finish, but also an excellent elastic recovery property capable of regaining an initial shape of the films even when deformed by pressing the films by a finger after packaging, a good bottom overwrapping stability, a less occurrence of peeling during transportation or display, or the like. Thus, the polyvinyl chloride-based films have such a superiority in product quality admitted by both distributors and consumers that the resulting products are free from deterioration in commercial value thereof.

However, in recent years, the polyvinyl chloride-based films have posed significant problems such as generation of a hydrogen chloride gas during incineration of the films and elution of a plasticizer compounded in a large amount in the films. For these reasons, various studies have been made on alternate materials to be substituted for the polyvinyl chloride-based films. In particular, stretch packaging films of various types employing polyolefin-based resins have been proposed. Among them, studies have been actively made on a stretch packaging film having a two kind/three layer structure which includes front and rear surface layers formed of an ethylene-vinyl acetate copolymer as a main component thereof and an intermediate layer formed of various polypropylene-based resins as a main component thereof because of good surface properties as well as transparency, adequate heat resistance, flexibility for design of materials, economical efficiency, etc., which are required for a stretch film.

For example, there has been proposed a stretch film for food packaging which has the above two kind/three layer structure including an intermediate layer that comprises a propylene-based polymer (A) having a heat of crystallization of 10 to 60 J/g and a component (B) comprising any material selected from the group consisting of a petroleum resin, a terpene resin, a chroman-indene resin, a rosin resin and hydrogenated derivatives of these resins, and has a specific storage elastic modulus (Patent Literature 1).

However, the packaging with the polyvinyl chloride-based films is performed at a lower tension in many cases because the polyvinyl chloride-based films are excellent in elastic recovery. On the other hand, in the case of a stretch film formed of the polyolefin-based resins, packaging conditions upon using such a stretch film in an automatic packaging machine differ from those in the case of the polyvinyl chloride-based films. As a result, in an automatic packaging machine adapted for the polyvinyl chloride-based films, it may be difficult to suitably conduct the packaging using a non-chlorine-based stretch packaging film.

US6541123 discloses a three-layer stretch packaging film comprising opposite outermost surface layers each comprising an ethylene-vinyl acetate resin as a main component and an intermediate layer comprising a blend of 40 wt% soft polypropylene type resin, 30 wt% of a propylene-ethylene random copolymer, 10 wt% of a hydrogenated styrene-butadiene rubber, and 20% of an hydrogenated petroleum resin. The stretch packaging film has an average loss tangent at 20°C of 0.37.

Since the automatic packaging machine is expensive and it is therefore not easy to change a model of the machine, etc., in the existing circumstances, there is a demand for development of the non-chlorine-based stretch packaging film that can be suitably used even in the automatic packaging machine for the polyvinyl chloride-based stretch packaging films.

### CITATION LIST:

### PATENT LITERATURE

Patent Literature 1: Japanese Patent Application Laid-Open (KOKAI) No. 9-154479(1997)

### SUMMARY OF INVENTION

### PROBLEMS TO BE SOLVED BY THE INVENTION

The present invention has been accomplished to solve the above problems of the conventional art. An object of the present invention is to provide a non-chlorine-based stretch packaging film which is produced using a specific ethylene resin and a specific polypropylene-based resin as main components, and exhibits a good packaging suitability such as a high packaging efficiency and neat packaging finish even when conducting the packaging by an automatic packaging machine adapted for a polyvinyl chloride-based film.

As a result of the present inventors' earnest study in view of the above problems, it has been found that the above problem can be readily solved by a film having a specific structure. The present invention has been attained on the basis of this finding.

### MEANS FOR SOLVING PROBLEMS

The present invention provides a stretch packaging film as defined in claim 1.

### EFFECTS OF THE INVENTION

In accordance with the present invention, there is provided a non-chlorine-based stretch packaging film that can exhibit various good properties as a suitability for use in an automatic packaging machine (such as a cutting property, a resistance to occurrence of wrinkles upon packaging, a bottom overwrapping stability and a tearing property) even when used in an automatic packaging machine adapted for a polyvinyl chloride-based film.

### PREFERRED EMBODIMENTS FOR CARRYING OUT THE INVENTION

In the following, the stretch packaging film as an example of the preferred embodiment of the present invention (hereinafter referred to as a "stretch film of the present invention") is explained. However, it should be noted that the following embodiment is only illustrative and not intended to limit the present invention thereto.

In the stretch film of the present invention, by forming surface layers each comprising an ethylene-based resin (A) as a main component to provide a laminated structure, it is possible to enhance a heat sealing property (bottom sealing property) of the film, in particular, under a low-temperature condition, as well as a self-adhering property and an inflation moldability thereof.

Examples of the ethylene-based resin (A) include low-density polyethylene, linear low-density polyethylene, linear ultra-low-density polyethylene, medium-density polyethylene, high-density polyethylene, and copolymers comprising ethylene as a main component. Specific examples of the copolymers comprising ethylene as a main component include copolymers or multi-component copolymers of ethylene with at least one comonomer selected from the group consisting of α-olefins having 3 to 10 carbon atoms such as propylene, butene-1, pentene-1, hexene-1, 4-methyl pentene-1, heptene-1 and octene-1; vinyl esters such as vinyl acetate and vinyl propionate; unsaturated carboxylic acid esters such as methyl acrylate, ethyl acrylate, methyl methacrylate and ethyl methacrylate and ionomers thereof; and unsaturated compounds such as conjugated dienes and non-conjugated dienes. The ethylene-based resin (A) may also be in the form of a mixed composition of these compounds, or the like. The content of an ethylene unit in the ethylene-based polymer is usually more than 50% by mass.

Among the above compounds as the ethylene-based resin (A), preferred is at least one ethylene-based polymer selected from the group consisting of low-density polyethylene, linear low-density polyethylene, linear ultra-low-density polyethylene, an ethylene-vinyl acetate copolymer (EVA), an ethylene-acrylic acid ester copolymer and an ethylene-methacrylic acid ester copolymer.

Meanwhile, specific examples of the acrylic acid ester in the above ethylene-acrylic acid ester copolymer include methyl acrylate and ethyl acrylate. Specific examples of the methacrylic acid ester in the above ethylene-methacrylic acid ester copolymer include methyl methacrylate and ethyl methacrylate.

Among the above compounds, the more preferred ethylene-based resin (A) is an ethylene-vinyl acetate copolymer having a vinyl acetate unit content of 5 to 25% by mass and a melt flow rate of 0.2 to 10 g/10 min (as measured at 190°C under a load of 21.18 N according to JIS K 7210). In particular, the melt flow rate of the ethylene-vinyl acetate copolymer is preferably 0.5 to 8 g/10 min and more preferably 1 to 6 g/10 min.

When the vinyl acetate unit content in the ethylene-vinyl acetate copolymer is not less than 5% by mass, the resulting film is soft, and it is possible not only to maintain a flexibility and an elastic recovery property of the film, but also to impart a good adhesion property to a surface of the film. On the other hand, when the vinyl acetate unit content in the ethylene-vinyl acetate copolymer is not more than 25% by mass, the resulting film can be prevented from exhibiting an excessively high surface adhesion property, and therefore can maintain a good winding property and a good appearance. In addition, when the melt flow rate of the ethylene-vinyl acetate copolymer is not less than 0.2 g/10 min, the resulting resin composition can maintain a good extrusion moldability. On the other hand, when the melt flow rate of the ethylene-vinyl acetate copolymer is not more than 10 g/10 min, the resulting resin composition can maintain a good film-forming stability to thereby suitably suppress thickness variation and variation in mechanical strength of the resulting film, etc.

The intermediate layer is a layer comprising a specific propylene-based resin (B) as a main component, and additionally also components C and D.

In the present invention, it is preferred that the heat of crystallization (ΔHc) of the intermediate layer falls in a specific range (not less than 10 J/g and not more than 60 J/g). Additionally, the intermediate layer may have a crystallization peak temperature (Tc) of not lower than 70°C. When the heat of crystallization (ΔHc) of the intermediate layer is less than 10 J/g, the resin composition for the intermediate layer tends to have a poor film-forming property owing to an excessively low crystallizability thereof, and the resulting film tends to become excessively soft or tends to be insufficient in strength when used at an ordinary temperature, thereby occasionally causing problems upon practical use. On the other hand, when the heat of crystallization (ΔHc) of the intermediate layer is more than 60 J/g, the resulting film tends to require a large force upon elongation and stretch thereof and exhibit only a non-uniform elongation, and therefore tends to be unsuitable as a stretch film. The method of controlling the heat of crystallization (ΔHc) of the intermediate layer to the desired range is not particularly limited, and there may be suitably used the method of mixing the propylene-based resin (B) with the other kind of resin. Among them, there is used the method of mixing the propylene-based resin (B) with the below-mentioned resin (C) from the standpoint of imparting various good properties as a suitability for packaging machines (such as a cutting property, a resistance to occurrence of wrinkles upon packaging, a bottom overwrapping stability, a tearing property and a transparency after packaging).

Examples of such a propylene-based resin (B) include a homopolymer of propylene, and a random copolymer or a block copolymer of propylene and the "other monomer copolymerizable with propylene".

When compounding such a propylene-based resin (B) as a main component of the intermediate layer of the film, the resulting film can be enhanced in various properties as a packaging suitability such as a bottom overwrapping property and a cutting property. In addition, the resin pellets as a raw material of the film can be enhanced in storage stability, and the resin composition constituting the intermediate layer can be enhanced in strength and heat resistance.

Examples of the other monomer copolymerizable with propylene include α-olefins having 4 to 20 carbon atoms such as ethylene, 1-butene, 1-hexene, 4-methyl pentene-1 and 1-octene; and dienes such as divinyl benzene, 1,4-cyclohexadiene, dicyclopentadiene, cyclooctadiene and ethylidene norbornene. Two or more of these monomers may be copolymerized with propylene.

From the standpoint of imparting a necessary adequate flexibility to the stretch film, a mixed resin obtained from one or two components selected from the group consisting of a propylene-ethylene random copolymer, a propylene-ethylene-butene-1 copolymer, a reactor-type polypropylene-based elastomer, a propylene-ethylene copolymer, a propylene-α-olefin copolymer and a block polypropylene is preferably used as the propylene-based resin (B) in the intermediate layer.

Meanwhile, the propylene-based resin (B) having a heat of crystallization (ΔHc) of not less than 30 J/g as measured at a temperature drop rate of 10°C/min using a differential scanning calorimeter (DSC) can maintain good strength and heat sealing property.

The heat of crystallization (ΔHc) of the propylene-based resin (B) may vary depending upon a molecular weight, an ethylene content (copolymerization ratio), a random degree (dispersibility of an ethylene component in the copolymer) or a stereo regularity of the propylene-based resin (B). In general, there is such a tendency that the larger the heat of crystallization becomes, the higher the peak temperature increases, so that it is generally considered that the resin having a large heat of crystallization is excellent in heat resistance. From such a viewpoint, the heat of crystallization (ΔHc) of the propylene-based resin (B) is preferably not less than 30 J/g, more preferably not less than 40 J/g and still more preferably not less than 50 J/g. The upper limit of the heat of crystallization (ΔHc) of the propylene-based resin (B) is not particularly limited, and is not more than 150 J/g from the practical viewpoint.

In the case where the propylene-based resin (B) is in the form of a block polypropylene, when the particle diameter of a rubber component included in the intermediate layer is not more than 1 µm, deterioration in transparency of the intermediate layer can be prevented and an impact generated in the intermediate layer upon being stretched can be reduced. Therefore, the intermediate layer comprising such a rubber component is preferably used for the stretch film. Meanwhile, when the particle diameter of the rubber component included in the intermediate layer is not less than 1 µm, there is a fear that the rubber component becomes an origin of breakage of the stretch film upon being stretched.

The melt flow rate (MFR) of the propylene-based resin (B) is not particularly limited, and the MFR (as measured at 230°C under a load of 21.18 N according to JIS K 7210) is usually not less than 0.2 g/10 min, preferably 0.5 to 18 g/10 min and more preferably 1 to 15 g/10 min. When the MFR of the propylene-based resin (B) is not less than 0.2 g/10 min, the obtained resin composition can exhibit a stable extrusion moldability. When the MFR of the propylene-based resin (B) is not more than 20 g/10 min, the resin composition can be stably formed into a film shape upon molding, and the resulting film is free from thickness variation and deterioration or variation in mechanical strength, etc.

Examples of the above propylene-based resin (B) include "NOVATEC PP" (tradename) produced by Japan Polypropylene Corp., "NOBLEN" (tradename) produced by Sumitomo Chemical Co., Ltd., "PRIME POLYPRO" and "PRIME TPO" (tradenames) both produced by Prime Polymer Co., Ltd., "QUALEAR" (tradename) produced by SunAllomer Ltd., and "VERSIFY" (tradename) produced by The Dow Chemical Company.

The resin (C) is a block copolymer of an aromatic vinyl compound and isobutylene. Since such a block copolymer generally has a rubber elasticity and a flexibility, the block copolymer can impart an elastic recovery property to the resultant film and can effectively act to reduce a tensile modulus of the polypropylene-based resin as the component (B).

Examples of the aromatic vinyl compound include styrene as a typical example and also include a styrene derivative such as α-methyl styrene, etc.

Further, the weight ratio of the aromatic vinyl compound to isobutylene in the copolymer is preferably 3/97 to 40/60. Meanwhile, when the content of the aromatic vinyl compound in the copolymer is less than 3% by weight, the rigidity of the copolymer itself tends to become excessively low and therefore, the polymerization productivity tends to be lowered owing to difficulty in formation of pellets, etc. On the other hand, when the content of the aromatic vinyl compound in the copolymer is more than 40% by weight, the rigidity of the copolymer itself tends to become excessively high and therefore, the effect of imparting an elastic recovery property to the resultant film and the effect of reducing a tensile modulus thereof which are objects of addition of the component (B) tend to become insufficient.

Specific examples of the resin (C) include commercially available products such as a styrene-isobutylene copolymer elastomer ("SIBSTAR" (tradename) produced by Kaneka Corp.).

The content of the resin (C) in the resin composition constituting the intermediate layer is preferably controlled to 1 to 50% by mass. When the content of the resin (C) in the resin composition is not less than 1% by mass, an elastic recovery property required for use as a stretch film can be imparted to the resultant film. Specifically, the content of the resin (C) in the resin composition is more preferably not less than 5% by mass, and still more preferably not less than 10% by mass. In addition, when the content of the resin (C) in the resin composition is not more than 50% by mass, the resin (C) can be improved in compatibility with the propylene resin (B), so that the resultant film can be improved in transparency. Therefore, from the standpoint of accomplishing both of the effect of imparting the elastic recovery property to the resultant film and the effect of improving a transparency thereof, the content of the resin (C) in the resin composition is more preferably not more than 40% by mass.

The resin composition constituting the intermediate layer also contains, in addition to the component (B) and the component (C), a specific resin as a component (D).

Examples of the resin (D) include one resin or two or more resins selected from the group consisting of a petroleum resin, a terpene resin, a chroman-indene resin, a rosin-based resin and a hydrogenated derivative thereof (these resins are hereinafter totally referred to as a "petroleum-based resin").

The use of such a resin (D) is effective to further improve a packaging suitability of the film such as stiffness, cutting property and bottom overwrapping stability as well as a transparency of the film.

Examples of the petroleum resin include alicyclic petroleum resins obtained from cyclopentadiene or a dimer thereof, aromatic petroleum resins obtained from C9 components, and petroleum resins of a copolymer type obtained from the alicyclic and aromatic petroleum resins.

Examples of the terpene resin include terpene resins obtained from β-pinene and terpene-phenol resins.

Examples of the chroman-indene resin include thermoplastic synthetic resins produced by polymerizing a C8 chroman and a C9 indene as main monomers which are obtained by purifying a fraction distilled off from a tar at a temperature of 160 to 180°C, or the like.

Examples of the rosin-based resin include rosin resins such as gum rosins and wood rosins, and esterified rosin resins which are obtained by modifying rosins with glycerol, pentaerythritol, etc.

As the above petroleum-based resins, from the viewpoints of good color tone, thermal stability and compatibility, there are preferably used the hydrogenated derivatives.

In addition, the above petroleum-based resins have various softening temperatures that may vary mainly by the difference in molecular weight therebetween. The softening temperature of the petroleum-based resins is usually 100 to 150°C and preferably 110 to 140°C.

Specific examples of the petroleum-based resins include commercially available products such as "HI-LET" and "PETROSIN" (tradenames) both produced by Mitsui Chemicals Inc., "ALCON" (tradename) produced by Arakawa Chemical Industries, Ltd., "CLEARON" (tradename) produced by Yasuhara Chemical Co., Ltd., "I-MARV" (tradename) produced by Idemitsu Petrochemical Corp., and "ESCORETTE" and "REGALITE" (tradenames) produced by Eastman Chemical Co., Ltd.

The content of the resin (D) in the resin composition constituting the intermediate layer is preferably 1 to 40% by mass. When the content of the resin (D) in the resin composition is not less than 1% by mass, the resulting film can be imparted with properties required for a stretch film such as a cutting property and a bottom overwrapping stability. The content of the resin (D) in the resin composition is more preferably not less than 5% by mass and still more preferably not less than 10% by mass. On the other hand, when the content of the resin (D) in the resin composition is not more than 40% by mass, the resulting film is free from deterioration in low-temperature suitability required for a stretch film due to increase in glass transition temperature thereof, and can also be prevented from suffering from occurrence of blocking owing to bleeding of low-molecular compounds therefrom. Therefore, from such a viewpoint, the content of the resin (D) in the resin composition is preferably not more than 35% by mass and more preferably not more than 30% by mass.

The resin composition constituting the intermediate layer may also contain, in addition to the component (B), the component (C) and the component (D), an ethylene-based resin as a component (E).

The ethylene-based resin (E) may be the same polyethylene-based polymer as the ethylene-based resin (A) constituting a surface layer of the film or may be an ethylene-based resin different from the ethylene-based resin (A), and is preferably the same ethylene-based resin. When the ethylene-based resin (E) is the same ethylene-based polymer as the ethylene-based copolymer (A) constituting a surface layer of the film, it is possible to enhance adhesion between the intermediate layer and the surface layers and mechanical properties of the film as a whole. In addition, for example, trimming loss of the film which occurs upon cutting and trimming both edges of the film as formed can be well improved by adding the trimmed film edges to constituting raw materials of the intermediate layer for reuse thereof. Thus, it is possible to prevent occurrence of wastes of the raw materials and thereby reduce costs for the raw materials.

The most suitable ethylene-based resin (E) is preferably an ethylene-vinyl acetate copolymer having a vinyl acetate unit content of 5 to 25% by mass and a melt flow rate of 0.2 to 10 g/10 min (as measured at 190°C under a load of 21.18 N according to JIS K 7210). In particular, the melt flow rate of the ethylene-vinyl acetate copolymer is more preferably 0.5 to 8 g/10 min and still more preferably 1 to 6 g/10 min.

When the vinyl acetate unit content in the ethylene-vinyl acetate copolymer as the ethylene-based resin (E) is not less than 5% by mass, the resulting film is soft, and not only can maintain a flexibility and an elastic recovery property, but also can impart a good surface adhesion property to the film when the ethylene-based resin (E) is also used in a surface layer of the film. On the other hand, when the vinyl acetate unit content in the ethylene-vinyl acetate copolymer as the ethylene-based resin (E) is not more than 25% by mass, for example, even though the ethylene-based resin (E) is used in a surface layer of the film, the resulting film can be prevented from exhibiting an excessively high surface adhesion property, and therefore can maintain a good winding property and a good appearance. In addition, when the melt flow rate of the ethylene-vinyl acetate copolymer as the ethylene-based resin (E) is not less than 0.2 g/10 min, the resulting resin composition can maintain a good extrusion moldability. On the other hand, when the melt flow rate of the ethylene-vinyl acetate copolymer as the ethylene-based resin (E) is not more than 10 g/10 min, the resulting resin composition can maintain a good film-forming stability, so that it is possible to suppress thickness variation and variation in mechanical strength of the resulting film, etc.

The content of the ethylene-based resin (E) in the resin composition constituting the intermediate layer is preferably 1 to 40% by mass. When the content of the ethylene-based resin (E) in the resin composition constituting the intermediate layer is not less than 1% by mass, the resulting film can exhibit a sufficient low-temperature suitability required for a stretch film. The content of the ethylene-based resin (D) in the resin composition constituting the intermediate layer is more preferably not less than 5% by mass, and still more preferably not less than 10% by mass. On the other hand, when the content of the ethylene-based resin (E) in the resin composition constituting the intermediate layer is not more than 40% by mass, the resulting film can exhibit a sufficient bottom overwrapping property and a sufficient heat resistance. From such a viewpoint, the content of the ethylene-based resin (E) in the resin composition constituting the intermediate layer is more preferably not more than 35% by mass and still more preferably not more than 30% by mass.

The surface layers or the intermediate layer of the stretch film according to the present invention may be appropriately compounded with various additives for imparting various properties such as an anti-fogging property, an antistatic property, a slip property, an adhesion property, etc., to the resulting stretch film.

Examples of the various additives include aliphatic alcohol-based fatty acid esters as a compound obtained from a aliphatic alcohol having 1 to 12 carbon atoms and preferably 1 to 6 carbon atoms and a fatty acid having 10 to 22 carbon atoms and preferably 12 to 18 carbon atoms. Specific examples of the aliphatic alcohol-based fatty acid esters include monoglycerin oleate, polyglycerin oleate, glycerin triricinolate, glycerin acetyl ricinolate, polyglycerin stearate, glycerin laurate, polyglycerin laurate, methyl acetyl ricinolate, ethyl acetyl ricinolate, butyl acetyl ricinolate, propylene glycol oleate, propylene glycol laurate, pentaerythritol oleate, polyethylene glycol oleate, polypropylene glycol oleate, sorbitan oleate, sorbitan laurate, polyethylene glycol sorbitan oleate and polyethylene glycol sorbitan laurate; polyalkyl ether polyols, more specifically, such as polyethylene glycol and polypropylene glycol; and paraffin-based oils. These compounds may be used alone or in combination of any two or more thereof.

These additives may be suitably used in an amount of 0.1 to 12 parts by mass and preferably 1 to 8 parts by mass based on 100 parts by mass of the resin component constituting the surface layers and/or the intermediate layer.

The stretch film according to the present invention is in the form of a laminated film comprising at least three layers comprising the surface layers each formed of the ethylene-based resin (A) and the intermediate layer formed of the resin composition comprising the specific propylene-based resin (B) as a main component. The stretch film of the present invention may further comprise the other appropriate layer (hereinafter also referred to merely as a "P layer"), if required, unless the merits of the present invention are adversely affected, in order to improve mechanical properties or adhesion between the respective layers. The surface layer (hereinafter also referred to merely as an "S layer") may also include, in addition to the opposite surface layers, the same layer as the intermediate layer. The intermediate layer (hereinafter also referred to merely as an "M layer") may be at least one layer formed between the opposite surface layers, and may also be constituted of two or more layers. Typical examples of a layer structure of the stretch film according to the present invention include a three layer structure constituted of (S layer)/(M layer)/(S layer), a four layer structure constituted of (S layer)/(P layer)/(M layer)/(S layer) and a five layer structure constituted of (S layer)/(P layer)/(M layer)/(P layer)/(S layer) or (S layer)/(M layer)/(P layer)/(M layer)/(S layer), etc. In these cases, the resin compositions and thickness ratios of the respective layers may be the same or different from each other.

In the stretch film according to the present invention, the thicknesses of the surface layers and intermediate layer are preferably controlled to such a suitable range that the ratio of the thicknesses of the front and rear surface layers is 10 to 65% whereas the ratio of the thickness of the intermediate layer is 90 to 35%. When the thickness ratios of the respective layers in the stretch film lie within the above-specified range, it is possible to attain a stable film-forming property and impart a good surface adhesion property to the resulting stretch film.

Further, in view of a stable film-forming processability, a surface adhesion property and various properties required for a stretch packaging film as well as a good economy, it is more preferred that the ratio of the thicknesses of the front and rear surface layers is 20 to 60% whereas the ratio of the thickness of the intermediate layer is 80 to 40%.

The thickness of the stretch film according to the present invention may be in such a range as ordinarily used for a stretch packaging film, more specifically, may be in the range of usually 8 to 30 µm and typically 9 to 20 µm.

The stretch film according to the present invention may be produced, for example, by melting and extruding a raw material from an extruder, and subjecting the thus extruded material to inflation molding or T-die molding to form the material into a film shape.

When it is intended to produce a laminated film, there is preferably used a co-extrusion method in which the raw materials are extruded through a multi-layer die using a plurality of extruders. In practice, respective resin materials are preferably melted and extruded from a ring die and then subjected to inflation molding. In this case, the blow-up ratio (i.e., a ratio of a diameter of a molded tube to a pore diameter of a die) is preferably not less than 3 and more preferably in the range of 4 to 10. In this case, as a method of cooling the molded tube, there may be used the method of cooling the molded tube either from an outside of the tube or from both inside and outside of the tube.

Further, the resulting film may be heated to a temperature not higher than a crystallization temperature of the resin used therein and then may be drawn in a longitudinal direction of the film at a draw ratio of 1.2 to 5 times, or in a biaxial direction of the film, i.e., in both longitudinal and lateral directions of the film at a draw ratio of 1.2 to 5 times for each direction, by utilizing a difference in rotating speed between nip rolls, whereby the resulting film can be improved in cutting property and can be imparted with a heat contraction property, etc.

The storage elastic modulus of the stretch film according to the present invention is controlled such that an average loss tangent (tanδ) at -40 to 0°C is not less than 0.12 and a loss tangent (tanδ) at 20°C is not less than 0.20 as measured at an oscillation frequency of 10 Hz and a distortion of 0.1% by a dynamic viscoelasticity measuring method as prescribed in the Method A of JIS K 7198. When the above loss tangent (tanδ) values are satisfied, the stress relaxation property of the film is substantially the same as that of the polyvinyl chloride-based film, and therefore, it is possible to perform neat packaging without occurrence of wrinkles of the film even when the packaging is carried out with a low tension in an automatic packaging machine adapted for the polyvinyl chloride-based film.

The above respective properties can be attained by suitably controlling a mixing ratio of the propylene-based resin (B), the resin (C) and the resin (D) which are used in the intermediate layer, and particularly by controlling the mixing ratio of the resin (C) to 5 to 40% by mass.

The storage elastic modulus of the stretch film according to the present invention may be controlled such that the storage elastic modulus (E') at 20°C of the film is preferably in the range of 100 MPa to 500 MPa as measured at an oscillation frequency of 10 Hz and a distortion of 0.1% by a dynamic viscoelasticity measuring method as prescribed in the Method A of JIS K 7198. When the film is used in the form of a soft film, the value of an elastic modulus thereof as measured near room temperature may be used as an index. When the storage elastic modulus (E') at 20°C of the film is not less than 100 MPa, it is possible to prevent occurrence of drawbacks such as poor workability owing to adhesion between the films at room temperature. On the other hand, when the storage elastic modulus (E') at 20°C of the film is not more than 500 MPa, the resulting film is prevented from exhibiting an excessively high hardness and has an adequate elongation even in an automatic packaging machine adapted for the polyvinyl chloride-based film in which packaging is carried out with a low tension, and therefore the resulting film can be advantageously used in the applications of soft films.

The above respective properties can be attained by suitably controlling a mixing ratio of the propylene-based resin (B), the resin (C) and the resin (D) which are used in the intermediate layer, particularly by controlling the mixing ratio of the resin (C) to 5 to 40% by mass, and by allowing the propylene-based resin (B) used in the intermediate layer to satisfy the conditions of a crystallization peak temperature (Tc) of not lower than 70°C and a heat of crystallization (ΔHc) of 10 to 60 J/g as measured at a temperature drop rate of 10°C/min using a differential scanning calorimeter (DSC).

The flexibility of the stretch film according to the present invention may be controlled such that the tensile stress at 100% elongation in a width direction (TD) of the film is preferably in the range of 40 to.140 kgf/cm² and more preferably in the range of 50 to 130 kgf/cm² as measured by subjecting the film to a tensile test at a temperature of 20°C and an elastic stress rate of 200 mm/min according to JIS Z 1702.

The above respective properties can be attained by the method similar to the above method of attaining the storage elastic modulus (E').

The "stretch film" as used in the present invention is intended to mean a wide range of packaging films having an elongation and a self-adhesion property. Typical examples of the stretch film include packaging films for prepackaging to overwrap fruits, meats or prepared food placed on lightweight trays, or packaging films for overwrapping to fix luggage upon transportation thereof.

The "main component" as used in the present invention is intended to mean that the other components are included in such an amount that the effects of the main component are not adversely influenced by addition thereof, unless otherwise specified. In this case, the content of the main component (a total content of two or more components when the two or more components are included in the main component) is not particularly limited. However, the content of the main component in the resulting composition is not less than 50% by mass, preferably not less than 70% by mass and still more preferably not less than 90% by mass (inclusive of 100%).

In addition, on the basis of the definitions of JIS, the "sheet" as used herein generally means a thin flat product generally having a comparatively small thickness relative to a length and a width of the product, whereas the "film" as used herein generally means a thin flat product having an extremely small thickness relative to a length and a width of the product, and a maximum thickness that is defined as an optional value, which is usually supplied in the form of a roll (refer to Japan Industrial Standards JIS K 6900). For example, with respect to the thickness, in a narrow sense, the sheet is a product having a thickness of not less than 100 µm, whereas the film is a product having a thickness of less than 100 µm. However, there is no clear boundary between the sheet and the film. In the present invention, it is not necessary that the sheet and the film are literally distinguished from each other. Therefore, in the present invention, it should be understood that even through the product is referred to as the "film", the product also comprises the "sheet", and on the contrary, even through the product is referred to as the "sheet", the product also comprises the "film".

### EXAMPLES

The present invention is described in more detail by Examples below. However, the following Examples are only illustrative and not intended to limit the present invention thereto. Meanwhile, various measurements and evaluations of films and materials therefor as described in the present specification were conducted as follows. In the following descriptions, the flow direction of a film from an extruder is referred to as a "longitudinal direction", whereas the direction perpendicular to the flow direction is referred to as a "lateral direction".

### (1) Crystallization peak temperature (Tc) and heat of crystallization (ΔHc):

Using "DSC-7" manufactured by Perkin-Elmer Corp., a sample to be measured was heated to 200°C at a temperature rise rate of 10°C/min, held at 200°C for 1 min, and then cooled at a temperature drop rate of 10°C/min according to JIS K 7121 and JIS K 7122 to prepare a crystallization curve of the sample. On the basis of the thus prepared crystallization curve, the crystallization peak temperature (Tc) and the heat of crystallization (ΔHc) of the sample were determined.

### (2) Average loss tangent (tanδ) at -40 to 0°C:

According to a dynamic viscoelasticity measuring method described in the Method A of JIS K 7198, using a dynamic viscoelasticity analyzer "DVA-200 Model" manufactured by I.T. Keisoku Seigyo Co., Ltd., the dynamic viscoelasticity of a film was measured in a lateral direction (TD) thereof at an oscillation frequency of 10 Hz and a distortion of 0.1% while the temperature therein was raised at a rate of 1°C/min from -100°C to 200°C to obtain measurement data. The average loss tangent (tanδ) at -40 to 0°C of the film was calculated from the thus obtained data.

### (3) Loss tangent (tanδ) at 20°C:

According to a dynamic viscoelasticity measuring method described in the Method A of JIS K 7198, using a dynamic viscoelasticity analyzer "DVA-200 Model" manufactured by I.T. Keisoku Seigyo Co., Ltd., the dynamic viscoelasticity of a film was measured in a lateral direction (TD) thereof at an oscillation frequency of 10 Hz and a distortion of 0.1% while the temperature therein was raised at a rate of 1°C/min from -100°C to 200°C to obtain measurement data. The loss tangent (tanδ) at 20°C of the film was calculated from the thus obtained data.

### (4) Storage elastic modulus (E'):

According to a dynamic viscoelasticity measuring method described in the Method A of JIS K 7198, using a dynamic viscoelasticity analyzer "DVA-200 Model" manufactured by I.T. Keisoku Seigyo Co., Ltd., the dynamic viscoelasticity of a film was measured in a lateral direction (TD) thereof at an oscillation frequency of 10 Hz and a distortion of 0.1% while the temperature therein was raised at a rate of 1°C/min from -100°C to 200°C to obtain measurement data. The storage elastic modulus (E') at 20°C of the film was determined from the thus obtained data.

### (5) Flexibility:

A tensile test was carried out at 20°C at an elastic stress rate of 200 mm/min according to JIS Z 1702 to measure a tensile stress (kgf/cm²) at 100% elongation in a width direction of the film. The flexibility of the film was evaluated from the thus measured tensile stress according to the following ratings.
A: The tensile stress value (kgf/cm²) was not less than 50 and less than 80;
B: The tensile stress value (kgf/cm²) was not less than 40 and less than 50, or not less than 80 and less than 90;
C: The tensile stress value (kgf/cm²) was not less than 20 and less than 40, or not less than 90 and less than 140; and
D: The tensile stress value (kgf/cm²) was less than 20 or not less than 140.

### (6) Suitability for packaging machines:

Using an automatic packaging machine adapted for a polyvinyl chloride-based film, a foamed polystyrene tray (length: 330 mm; width: 230 mm; height: 38 mm) was wrapped with the film (width: 350 mm) obtained in the respective Examples and Comparative Example to evaluate a transparency after packaging, a cutting property, a resistance to occurrence of wrinkles upon packaging, a bottom overwrapping stability and a tearing property according to the ratings shown in Table 2. The evaluation results are shown in Table 1 below.

### Example 1:

The resin composition for forming opposite surface layers was prepared as follows. That is, 97 parts by mass of EVA as an ethylene-based polymer (component (A)) (vinyl acetate content: 15% by mass; melt flow rate (as measured at 190°C under a load of 21.18 N according to JIS K 7210): 2.0 g/10 min) and 3 parts by mass of diglycerin oleate as an anti-fogging agent were melted and kneaded with each other. On the other hand, the resin composition for forming an intermediate layer was prepared as follows. That is, a propylene-based resin as a component (B) (block polypropylene; heat of crystallization: 67.0 J/g; crystallization peak temperature: 121.0°C; melt flow rate (as measured at 230°C under a load of 21.18 N according to JIS K 7210): 2 g/10 min), a block copolymer of an aromatic vinyl compound and isobutylene as a component (C) (melt flow rate (as measured at 230°C under a load of 21.18 N according to JIS K 7210): 6.0 g/10 min), and a hydrogenated petroleum resin ("ALCON P140" produced by Arakawa Chemical Industries, Ltd.; softening temperature: 140°C) as a component (D) were melted and kneaded together at a mass ratio (B)/(C)/(D) of 51.4/32.4/16.2. The thus obtained molten kneaded resin was subjected to co-extrusion inflation molding using a three-layer ring die heated to 190°C at a blow-up ratio of 5.0 to thereby obtain a three-layer laminated film having a total thickness of 12 µm (2 µm/8 µm/2 µm). The thus obtained three-layer laminated film was then subjected to evaluation.

### Example 2:

The same procedure as in Example 1 was conducted except that upon preparing the resin composition forming the intermediate layer in Example 1, the component (B) and an ethylene-α olefin copolymer (heat of crystallization: 8.9 J/g; crystallization peak temperature: 100.0°C; melt flow rate (as measured at 230°C under a load of 21.18 N according to JIS K 7210): 2 g/10 min) were mixed at a ratio of 64/36 and then the components (C) and (D) were mixed therein, thereby obtaining a three-layer laminated film. The thus obtained three-layer laminated film was then subjected to evaluation.

### Comparative Example 1:

The same procedure as in Example 1 was conducted except that upon preparing the resin composition forming the intermediate layer in Example 1, a propylene-based resin as the component (B) (a propylene-ethylene random copolymer; heat of crystallization: 62.5 J/g; crystallization peak temperature: 112.3°C; melt flow rate (as measured at 230°C under a load of 21.18 N according to JIS K 7210): 7.0 g/10 min), a hydrogenated derivative of a block copolymer of an aromatic vinyl compound and a conjugated diene as the component (C) (melt flow rate (as measured at 190°C under a load of 21.18 N according to JIS K 7210): 0.7 g/10 min), and a hydrogenated petroleum resin ("ALCON P125" produced by Arakawa Chemical Industries, Ltd.; softening temperature: 125°C) as the component (D) were melted and kneaded at a mass ratio (B)/(C)/(D) of 51.4/32.4/16.2, thereby obtaining a three-layer laminated film. The thus obtained three-layer laminated film was then subjected to evaluation.

### Reference Example 1:

A commercially available polyvinyl chloride-based film (produced by Mitsubishi Plastics, Inc.) was purchased and then evaluated.

**Table 1**

| | | Examples | | Comp. Ex. | Ref. Ex. |
|---|---|---|---|---|---|
| | | 1 | 2 | 1 | 1 |
| Surface layer | (A) | 97 | 97 | 97 | - |
| | Additive | 3 | 3 | 3 | - |
| Intermediate layer | (B) | 51.4 | 51.4 | 51.4 | - |
| | (C) | 32.4 | 32.4 | 32.4 | - |
| | (D) | 16.2 | 16.2 | 16.2 | - |
| Total thickness (µm) | | 12 | 12 | 12 | 11 |
| Average loss tangent at -40 to 0°C (tanδ) | | 0.147 | 0.136 | 0.098 | 0.186 |
| Loss tangent at 20°C (tanδ) | | 0.248 | 0.266 | 0.338 | 0.294 |
| Storage elastic modulus (E') (MPa) | | 324 | 188 | 153 | 115 |
| Flexibility | | A | A | B | A |
| Suitability for use in an automatic packaging machine | Cutting property | B | B | B | B |
| | Resistance to occurrence of wrinkles upon packaging | A | A | D | A |
| | Bottom overwrapping stability | B | B | B | B |
| | Tearing property | B | B | B | B |

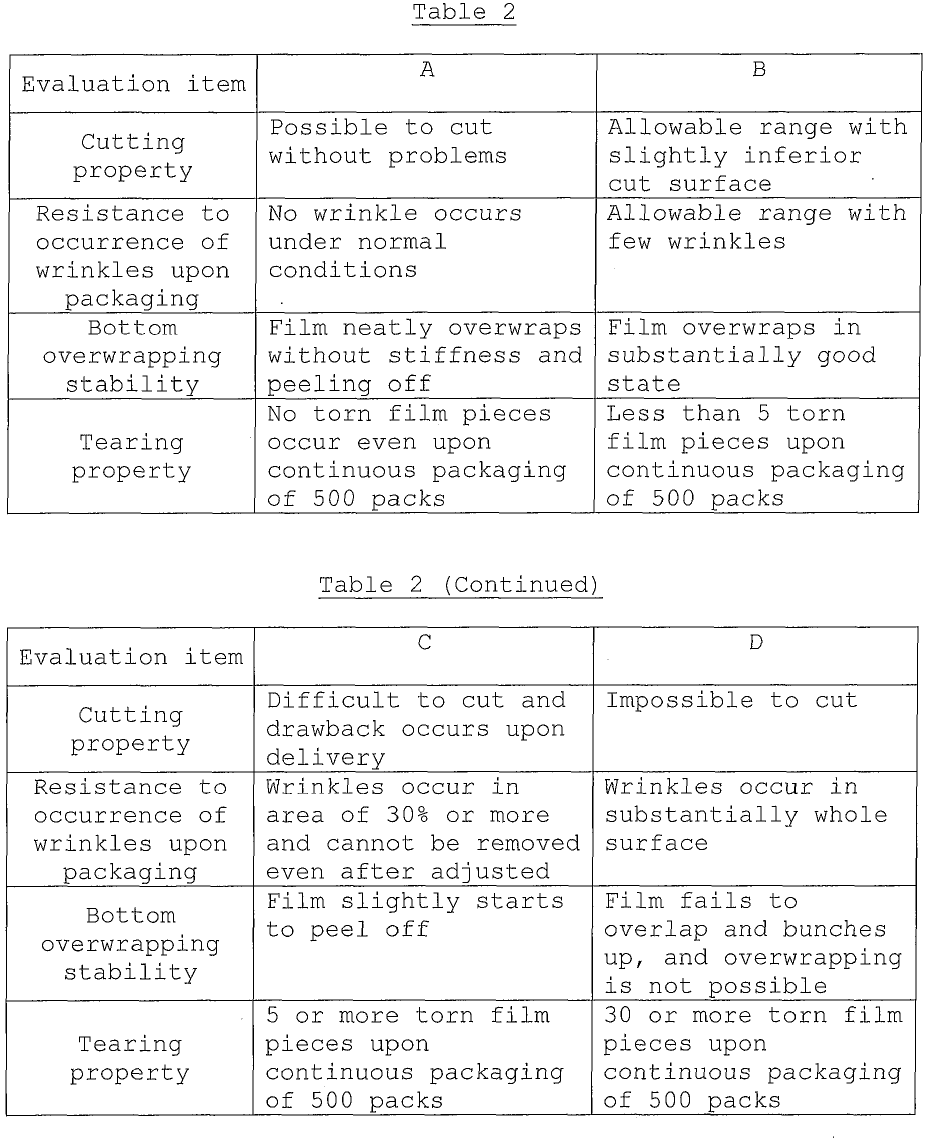

From the results shown in Table 1, it was recognized that the films obtained in Examples 1 and 2 had an average loss tangent (tanδ) at -40 to 0°C of not less than 0.12 and a loss tangent (tanδ) at 20°C of not less than 0.20 as measured at an oscillation frequency of 10 Hz and a distortion of 0.1% by a dynamic viscoelasticity measuring method, and the intermediate layer comprising the propylene resin (B) as a main component had a heat of crystallization (ΔHc) of not less than 10 J/g and not more than 60 J/g as measured at a temperature drop rate of 10°C/min using a differential scanning calorimeter (DSC), and further the films obtained in Examples 1 and 2 exhibited good results concerning a packaging suitability even when used in an automatic packaging machine adapted for a polyvinyl chloride film in which packaging was carried out with a low tension. It was also recognized that the films obtained in Examples 1 and 2 were capable of satisfying a good storage elastic modulus (E') and thereby exhibited good results concerning various packaging suitability such as a cutting property and a tearing property as well as a flexibility. Further, it was recognized that the film obtained in Example 2 was more excellent especially in a flexibility and a suitability for packaging machines because the resin composition forming the intermediate layer thereof included a hydrogenated petroleum resin as the component (D) in addition to the components (B) and (C). Therefore, the film obtained in Example 2 was regarded as being a more preferred embodiment. On the other hand, in the case that the film had an average loss tangent (tanδ) at -40 to 0°C of not more than 0.12 as measured at an oscillation frequency of 10 Hz and a distortion of 0.1% by a dynamic viscoelasticity measuring method, the film exhibited a poor packaging suitability owing to failure in good packaging and occurrence of wrinkles upon packaging when used in an automatic packaging machine adapted for a polyvinyl chloride-based film (Comparative Example 1). In addition, the polyvinyl chloride-based film satisfied the packaging suitability, but it was not adaptable to meet the requirements of a non-chlorine-based stretch packaging film.

### INDUSTRIAL APPLICABILITY

The film according to the present invention can be suitably used as a stretch packaging film for food packaging.

## Claims

1. A stretch packaging film which comprises a laminated film having at least three layers comprising:
opposite outermost surface layers each comprising an ethylene-based resin (A) as a main component and
an intermediate layer comprising a propylene-based resin (B) as a main component,
wherein the intermediate layer comprises the following component (C) and (D):
a block copolymer (C) of an aromatic vinyl compound and isobutylene; and
at least one resin (D) selected from the group consisting of a petroleum resin, a terpene resin, a chroman-indene resin, a rosin-based resin and a hydrogenated derivative thereof.
and
which stretch packaging film has an average loss tangent (tanδ) at -40 to 0°C of not less than 0.12 and a loss tangent (tanδ) at 20°C of not less than 0.20 as measured at an oscillation frequency of 10Hz and a distortion of 0.1% by a dynamic viscoelasticity measuring method.

2. The stretch packaging film according to claim 1, wherein a storage elastic modulus (E') at 20°C of the laminated film is in the range of 100 to 500 MPa as measured at an oscillation frequency of 10Hz and a distortion of 0.1% by a dynamic viscoelasticity measuring method.

3. The stretch packaging film according to claim 1 or 2, wherein the intermediate layer has a crystallization peak temperature (Tc) of not lower than 70°C and a heat of crystallization (ΔHc) of 10 to 60 J/g as measured at a temperature drop rate of 10°C/min using a differential scanning calorimeter (DSC).

4. The stretch packaging film according to any one of claims 1 to 3, wherein the ethylene-based resin (A) is an ethylene-vinyl acetate copolymer having a vinyl acetate unit content of 5 to 25% by mass and a melt flow rate of 0.2 to 10 g/10 min (as measured at 190°C under a load of 21.18 N according to JIS K 7210).

## Patentansprüche

1. Streck-Verpackungsfolie, welche eine laminierte Folie mit mindestens drei Schichten umfasst, umfassend:
gegenüberliegende Außenoberflächenschichten, jeweils umfassend ein Ethylen-basiertes Harz (A) als eine Hauptkomponente und
eine Zwischenschicht, umfassend ein Propylen-basiertes Harz (B) als eine Hauptkomponente,
wobei die Zwischenschicht die folgenden Komponenten (C) und (D) umfasst:
ein Blockcopolymer (C) aus einer aromatischen Vinylverbindung und Isobutylen; und
mindestens ein Harz (D), gewählt aus der Gruppe, bestehend aus einem Erdölharz, einem Terpenharz, einem Chroman-Inden-Harz, einem Kolophinium-basierten Harz und einem hydrierten Derivat hiervon, und
wobei die Streck-Verpackungsfolie einen durchschnittlichen Verlusttangens (tanδ) bei -40 bis 0°C von nicht weniger als 0,12 und einen Verlusttangens (tanδ) bei 20°C von nicht weniger als 0,20 aufweist, gemessen bei einer Oszillationsfrequenz von 10Hz und einer Deformation von 0,1% durch ein dynamisches Viskoelastizitäts-Messverfahren.

2. Streck-Verpackungsfolie nach Anspruch 1, wobei ein Speicherelastizitätsmodul (E') bei 20°C der laminierten Folie im Bereich von 100 bis 500 MPa liegt, gemessen bei einer Oszillationsfrequenz von 10 Hz und einer Deformation von 0,1% durch ein dynamisches Viskoelastizitäts- Messverfahren.

3. Streck-Verpackungsfolie nach Anspruch 1 oder 2, wobei die Zwischenschicht eine Kristallisations-Peaktemperatur (Tc) von nicht weniger als 70°C und eine Kristallisationswärme (ΔHc) von 10 bis 60 J/g aufweist, gemessen bei einer Temperaturabsenkungsrate von 10°C/Min unter Verwendung eines Differenzial-Abtastkalorimeters (DSC).

4. Streck-Verpackungsfolie nach irgendeinem der Ansprüche 1 bis 3, wobei das Ethylen-basierte Harz (A) ein Ethylen-Vinylacetat-Copolymer mit einem Vinylacetateinheitengehalt von 5 bis 25 Masse% und einer Schmelzflussrate von 0,2 bis 10 g/10 Min (gemessen bei 190°C unter einer Last von 21,18 N gemäß JIS K 7210) ist.

## Revendications

1. Film d'emballage étirable qui comprend un film stratifié ayant au moins trois couches comprenant :
des couches de surface extérieure opposées, comprenant chacune une résine à base d'éthylène (A) en tant que composant principal et
une couche intermédiaire comprenant une résine à base de propylène (B) en tant que composant principal,
dans lequel la couche intermédiaire comprend les composants suivants (C) et (D) :
un copolymère séquencé (C) d'un composé vinyl aromatique et d'isobutylène ; et
au moins une résine (D) choisie dans le groupe consistant en une résine de pétrole, une résine terpénique, une résine de chromane-indène, une résine à base de colophane et un dérivé hydrogéné de celles-ci
et
lequel film d'emballage étirable a une tangente de perte moyenne (tan δ) à -40 à 0°C de pas moins de 0,12 et une tangente de perte (tan δ) à 20°C de pas moins de 0,20 telles que mesurées à une fréquence d'oscillation de 10 Hz et à une distortion de 0,1 % par une méthode de mesure de viscoélasticité dynamique.

2. Film d'emballage étirable selon la revendication 1, dans lequel un module d'élasticité au stockage (E') à 20°C du film stratifié est dans la plage de 100 à 500 MPa tel que mesuré à une fréquence d'oscillation de 10 Hz et à une distortion de 0,1 % par une méthode de mesure de viscoélasticité dynamique.

3. Film d'emballage étirable selon l'une des revendications 1 ou 2, dans lequel la couche intermédiaire a une température de pic de cristallisation (Tc) de pas moins de 70°C et une chaleur de cristallisation (ΔHc) de 10 à 60 J/g telles que mesurées à une allure de chute de température de 10°C/min à l'aide d'un calorimètre différentiel à balayage (DSC).

4. Film d'emballage étirable selon l'une quelconque des revendications 1 à 3, dans lequel la résine à base d'éthylène (A) est un copolymère éthylène-acétate de vinyle ayant une teneur en unités acétate de vinyle de 5 à 25 % en masse et un indice de fusion de 0,2 à 10 g/10 min (tel que mesuré à 190°C sous une charge de 21,18 N conformément à JIS K 7210).
